# DEMANDE DE BREVET EUROPEEN

(11) **EP 1 040 960 A1**
(43) Date de publication de la demande: **04.10.2000**
(21) Numéro de dépôt: 00400784.5
(22) Date de dépôt: 22.03.2000
(51) Int. Cl.: B60N 2/30, B60N 2/01

(54) **Vehicule automobile à habitacle modulaire**

(30) Priorité: 02.04.1999 FR 9904166
(71) Demandeur: Matra Automobile, 75016 Paris (FR)
(72) Inventeur: Heroguelle, Gérard G., 78330 Fontenay le Fleury (FR); Ulveling, Jean-Michel, 75016 Paris (FR)
(74) Mandataire: David, Alain

(57) **Abrégé**

Véhicule automobile à au moins deux lignes (26, 28) de sièges disposés sur un plancher (14), en arrière d'une planche de bord (24), entre deux panneaux latéraux (16, 18) du véhicule, un première ligne comportant un siège conducteur (30) et un siège avant passager (32) séparés par une console centrale (34) et au moins une seconde ligne de sièges (28) comportant deux sièges arrière passager (36, 38) séparés par un espace central vide (40), chaque siège comportant une assise (30a, 32a, 36a, 38a) et un dossier (30b, 32b, 36b, 38b) qui peut être rabattu sur cette assise, les sièges de la seconde ligne (28) étant montés à pivotement pour être rabattus dans ou contre les panneaux latéraux (16, 18) du véhicule et le siège avant passager (32) étant monté à déplacement longitudinal pour être poussé sous la planche de bord (24) dans une cavité (68) pratiquée pour la recevoir. Avantageusement, la console centrale est aussi montée à déplacement longitudinal pour être poussée sous la planche de bord (24) dans cette même cavité (68). Application à des véhicules urbains comme à des véhicules de grande habitabilité.

## Description

La présente invention se rapporte au domaine général des transports de passagers tant individuels que collectifs et elle concerne plus particulièrement un véhicule automobile présentant une très grande modularité de l'habitacle.

### Art antérieur

Dans la plupart des véhicules automobiles, le volume de chargement est lié à la configuration des sièges de l'habitacle et notamment à leur modularité. Aussi, lorsque l'on souhaite charger dans le véhicule des objets encombrants et notamment de grande longueur, la présence de ces sièges constitue alors une gène importante. Dans ce cas, il est classique de procéder directement à l'enlèvement des sièges qui, à cet effet, sont en général fixés au plancher du véhicule de façon amovible. Cette solution présente toutefois l'inconvénient notable d'interdire toute dépose inopinée, par exemple au cours d'un déplacement, car alors se pose le problème inévitable de l'entreposage temporaire des sièges ôtés. En outre, du fait du poids relativement important de ces sièges, une telle dépose et un portage hors du véhicule s'avère difficilement réalisable par une seule personne.

Aussi, il est connu notamment par la demande de brevet française N°2 759 334 de replier les sièges arrière passager dans une cuvette pratiquée dans le plancher du véhicule derrière les sièges avant. Cette solution présente toutefois l'inconvénient pour une garde au toit donné de réduire le volume utile de l'habitacle.

Par la demande de brevet française N°2 604 958, on connaît également un véhicule automobile dans lequel la troisième ligne de sièges, constituée d'une banquette, peut se déplacer selon l'axe longitudinal du véhicule jusqu'à venir dans une position de rangement au dos des sièges de première ligne, la deuxième ligne de siège étant ici encore repliée sous le plancher. Cette configuration ne permet toutefois pas une exploitation maximale du volume de l'habitacle lorsque le conducteur reste seul présent dans le véhicule.

### Objet et définition de l'invention

La présente invention propose donc un véhicule dont la configuration de chargement varie avec le nombre de passager du véhicule jusqu'à présenter un volume de chargement maximal lorsque le conducteur en est le seul occupant. Il permet en outre le chargement d'objets de grande longueur particulièrement encombrants, sans nécessiter la dépose des sièges et de leur portage vers un lieu d'entreposage (un garage par exemple).

Dans ce but, l'invention concerne un véhicule automobile à au moins deux lignes de sièges disposés sur un plancher, en arrière d'une planche de bord, entre deux panneaux latéraux du véhicule, une première ligne comportant un siège conducteur et un siège avant passager séparés par une console centrale t au moins une seconde ligne de sièges comportant deux sièges arrière passager séparés par un espace central vide, chaque siège comportant une assise et un dossier qui peut être rabattu sur cette assise, caractérisé en ce que les sièges de la seconde ligne sont montés à pivotement pour être rabattus dans ou contre les panneaux latéraux du véhicule et en ce que le siège avant passager est monté à déplacement longitudinal pour être poussé sous la planche de bord dans une cavité pratiquée pour la recevoir. Avantageusement, la console centrale est montée à déplacement longitudinal pour être poussée sous la planche de bord dans la cavité.

Cette nouvelle conception de l'aménagement de l'habitacle permet d'offrir aux utilisateurs du véhicule une très grande modularité dans le chargement. De plus, cette modification de l'habitacle qui peut être réalisée sans effort et à tout instant, augmente considérablement les possibilités d'utilisation du véhicule qui est dès lors particulièrement bien adapté à des besoins variables.

Dans un mode de réalisation préférentiel, le siège avant passager et la console centrale sont montés à coulissement le long de rails de guidage, ces rails s'étendant sous la planche de bord jusqu'au tablier avant du véhicule.

Chacun des sièges de seconde ligne ou de lignes suivantes bascule autour d'un axe d'articulation parallèle à un axe central longitudinal du véhicule. Selon le mode de réalisation envisagé, cet axe d'articulation longitudinal peut être solidaire d'un panneau latéral du véhicule et relié par exemple au panneau latéral du véhicule par un montant en forme de U ou bien encore de premiers pieds collatéraux du siège passager.

Avantageusement, chacun desdits sièges passager se replie dans une cavité pratiquée dans un panneau latéral du véhicule et chacun desdits sièges passager comporte des seconds pieds collatéraux munis de moyens d'accrochage au plancher du véhicule.

De préférence, chacun desdits sièges passager comporte une assise montée sur des glissières pour permettre un coulissement latéral du siège.

### Brève description des dessins

Les caractéristiques et avantages de la présente invention ressortiront mieux de la description suivante, faite à titre indicatif et non limitatif, en regard des dessins annexés sur lesquels :
- la figure 1 est une vue schématique en perspective de l'habitacle d'un véhicule automobile comportant deux lignes de sièges,
- la figure 2 est une vue schématique en perspective de l'habitacle d'un véhicule automobile dont l'un des deux sièges de seconde ligne est replié,
- la figure 3 est une vue schématique de l'arrière de l'habitacle de la figure 2 dans lequel les deux sièges de seconde ligne sont repliés,
- la figure 4 est une vue schématique de l'arrière de l'habitacle de la figure 2 dans lequel les deux sièges de seconde ligne sont repliés et le siège passager de première ligne ainsi que la console centrale sont dans une position de rangement sous la planche de bord, et
- la figure 5 est une vue schématique de l'arrière d'une variante de l'habitacle de la figure 2 dans lequel l'un des deux sièges de seconde ligne est replié.

### Description détaillée d'un mode de réalisation préférentiel

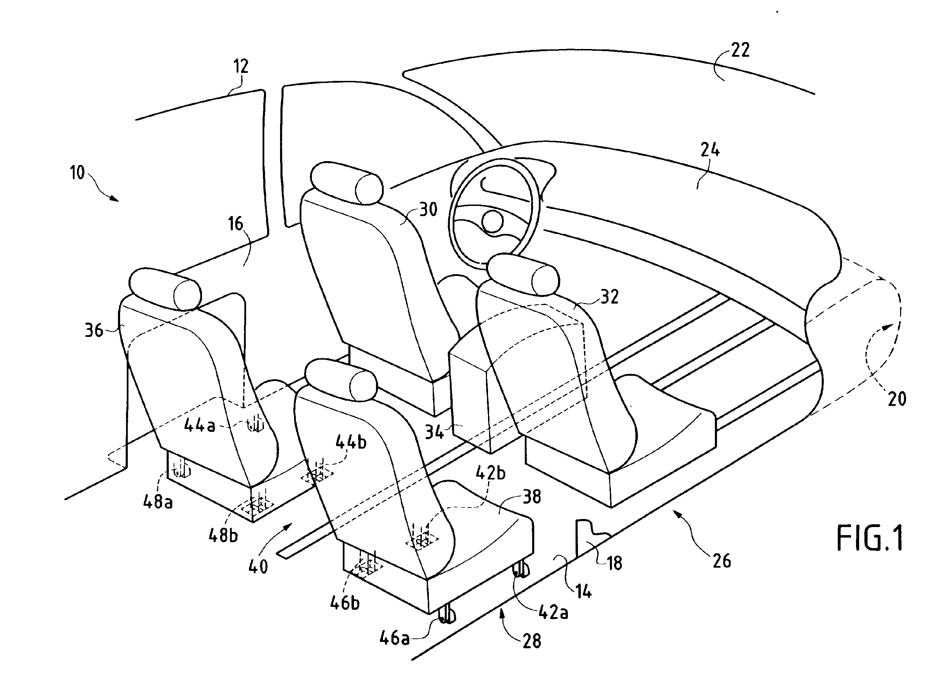

La figure 1 illustre en perpective de façon schématique l'habitacle d'un véhicule automobile muni de deux lignes de sièges (sans que ce nombre doive être considéré comme limitatif). Les sièges sont représentés dans leur position normale « d'utilisation ».

Ce véhicule est formé de plusieurs éléments de carrosserie qui définissent un volume fermé intérieur 10, sensiblement parallélépipèdique, appelé « habitacle ». Cet l'habitacle est délimité au dessus et au dessous respectivement par un pavillon 12 et un plancher 14 et au niveau des cotés droit et gauche par des panneaux latéraux 16, 18. A l'avant et à l'arrière, ce sont respectivement un tablier avant du véhicule 20 (que surmonte un pare-brise 22) et, par exemple, un hayon arrière (non représenté) qui assurent cette délimitation de l'habitacle 10.

Dans cet habitacle, en avant du pare-brise 22 sont disposées d'une part une planche de bord 24 comportant l'ensemble des instruments nécessaires à la conduite du véhicule (notamment le volant de direction) et d'autre part, l'une derrière l'autre, deux lignes de sièges 26, 28 dont une première ligne 26 comportant un siège conducteur 30 et un siège avant passager 32 séparés au niveau de l'axe central longitudinal de l'habitacle par une console centrale 34 et une seconde ligne de sièges 28 comportant deux sièges arrière passager 36, 38 disposés côte à côte et seulement séparés par un espace central vide 40.

Chaque siège qui comporte classiquement une assise 30a, 32a, 36a, 38a et un dossier 30b, 32b, 36a, 38a peut aussi être muni d'un appui-tête à hauteur et inclinaison variables 30c, 32c, 36c, 38c. Le dossier de chacun de ces sièges peut classiquement être rabattu ou replié sur l'assise par un pivotement d'environ 90° autour d'un axe d'articulation (non représenté).

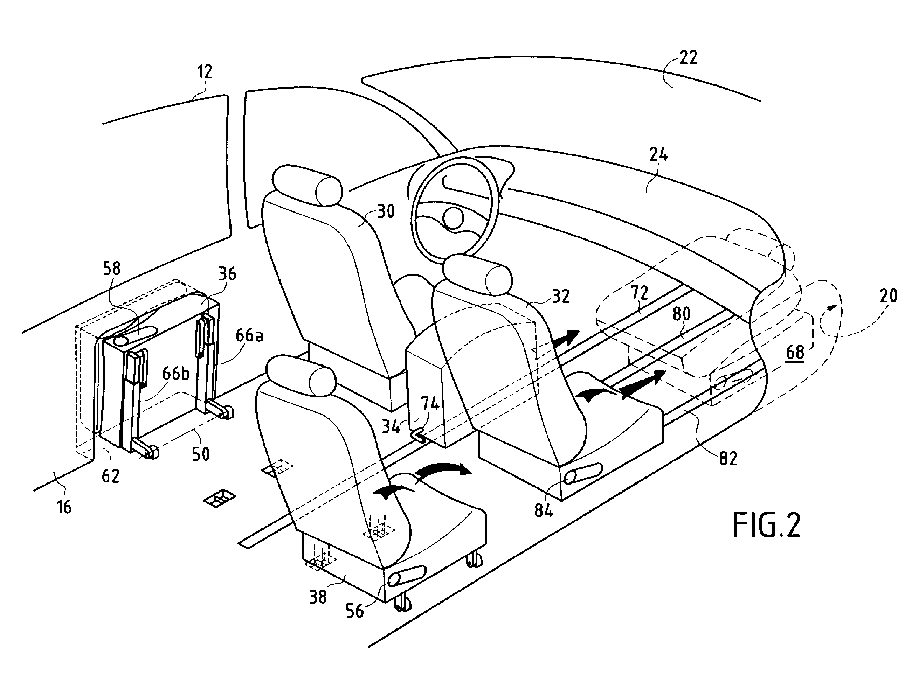

Comme le montre la figure 2, chacun des éléments de l'habitacle précités, à l'exception du siège conducteur 30, est transformable indépendamment pour accroître le volume de chargement du véhicule. Toutefois, cet accroissement de volume est obtenu sans dépose des sièges ni transfert de ceux-ci sous le plancher comme peut l'enseigner à ce jour l'état de l'art.

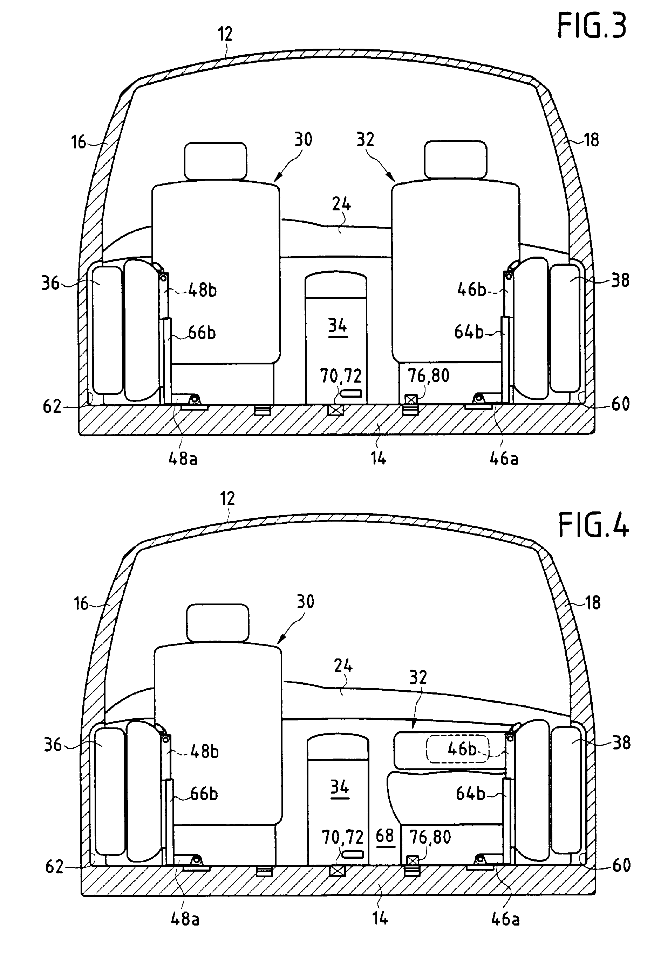

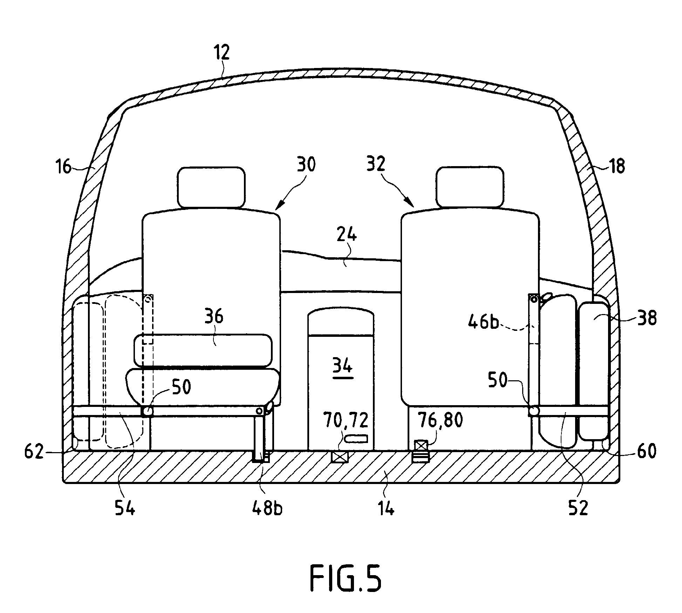

Ainsi, selon l'invention, les sièges de la seconde ligne 28 peuvent être rabattus dans ou contre les panneaux latéraux 16, 18 du véhicule (voir aussi la figure 3). A cet effet, l'assise 36a, 38a de ces sièges qui est montée par exemple sur des pieds avant 42a, 42b ;44a, 44b et arrière 46a, 46b ;48a, 48b disposés selon des axes longitudinaux parallèles à l'axe central longitudinal de l'habitacle (une configuration avec uniquement deux pieds latéraux est bien entendu aussi possible), peut être articulée autour d'un axe 50 parallèle à cet axe central longitudinal afin de permettre un basculement du siège sur le coté et ainsi dégager un volume de chargement supplémentaire. Cet axe d'articulation 50 est, selon le mode de réalisation envisagé, soit solidaire des panneaux latéraux 16, 18 du véhicule, par exemple par un montant 52, 54 en forme de U (voir la figure 5), soit solidaire de deux premiers pieds de chaque siège ; en l'espèce les pieds collatéraux 42a, 46a ; 44a, 48a, les plus extérieurs par rapport à l'axe central longitudinal de l'habitacle. Les deux autres pieds collatéraux de chaque siège 42b, 46b ; 44b, 48b, les plus proches de l'axe central longitudinal, sont quant à eux munis chacun d'un moyen débrayable d'accrochage au plancher qui peut être commandé par l'utilisateur par exemple au moyen d'un levier de manoeuvre approprié 56, 58. De tels moyens d'accrochage sont bien connus de l'homme de l'art et ils sont notamment décrits dans le brevet français N°93 00792 de la demanderesse. On notera, qu'afin d'augmenter le plus possible le volume de chargement du véhicule, les sièges en position de rangement sont avantageusement encastrés dans les panneaux latéraux au niveau de cavités 60, 62 pratiquées à cet effet pour recevoir au moins le dossier du siège replié. Des glissières 64a, 64b ; 66a, 66b peuvent être prévues au niveau de l'assise des sièges arrière passager, en complément des glissières conventionnelles de déplacement longitudinal (non représentées), pour permettre un coulissement latéral de ces assises en vue d'en faciliter le rangement dans les panneaux latéraux 16, 18.

De même, le siège avant passager 32, comme la console centrale 34, sont montés à déplacement longitudinal le long du plancher 14 du véhicule de telle sorte qu'ils peuvent être poussés ensemble ou non sous la planche de bord 24 dans une cavité 68 prévue à cet effet pour les recevoir ( voir la représentation en traits mixtes de la figure 2).

La console centrale 34 est montée sur un coulisseau 70 qui peut se déplacer sur un rail de guidage 72 disposé dans l'axe central de l'habitacle et s'étendant vers l'avant sous la planche de bord 24 jusqu'au tablier avant du véhicule 20 et vers l'arrière jusqu'au niveau de la seconde ligne de sièges 28. Des moyens conventionnel de blocage du coulisseau dans une position longitudinale déterminée sont bien entendu prévus au niveau de cette console. Leur déblocage est assuré par exemple par un levier de commande manuelle 74. Un descriptif détaillé de cette console est effectué dans la demande de brevet intitulée « Console de véhicule automobile » et déposée par la demanderesse le même jour que la présente demande.

De même, le siège avant passager 32 peut également être monté sur deux coulisseaux 76, 78 qui se déplacent sur deux rails parallèles 80, 82 fixés au plancher du véhicule 14 et s'étendant sous la planche de bord 24 jusqu'au tablier avant du véhicule 20. Des moyens conventionnel de blocage du coulisseau dans une position longitudinale déterminée sont bien entendu également prévus au niveau de ce siège avant passager. Leur déblocage est assuré par exemple par un levier de commande manuelle 84. Un descriptif détaillé de ce siège est effectué dans la demande de brevet intitulée « Siège escamotable de véhicule automobile » et déposée par la demanderesse le même jour que la présente demande. On notera que le mode de fixation du siège au plancher du véhicule et son mode de déplacement décrits ci-dessus ne doivent en aucune façon être considérés comme limitatifs et qu'un mode de déplacement différent, par exemple au moyen de roulettes, comme l'expose la demande conjointe précitée relative à un siège escamotable, est tout aussi envisageable.

Les différentes configurations que peut prendre l'habitacle selon les positions adoptées par les différents sièges passager entre leur position « d'utilisation » et leur position « de rangement » apparaîtront maintenant mieux aux figures 2 à 5. Les éléments identiques portent naturellement les mêmes références.

Sur la figure 2, le siège arrière gauche passager 36 est dans sa position de rangement dans le panneau latéral gauche 16. Cette première configuration est obtenue très simplement par rabattement du dossier du siège, déverrouillage des crochets de fixation au plancher et basculement du siège autour de son axe d'articulation 50. Cette procédure de repli serait pareillement applicable à des lignes de sièges supplémentaires : troisième, quatrième et lignes suivantes.

La figure 3 présente la configuration dans laquelle les deux sièges de seconde ligne sont repliés dans leur cavité de rangement respective 60, 62. La procédure de repli du siège arrière droit passager est bien entendu identique à celle du siège gauche voisin.

Une configuration intermédiaire est présentée à la figure 5 où le siège arrière gauche passager est encore verrouillé au plancher et il a été seulement procédé au repli du dossier sur l'assise du siège, ce qui correspond en pratique à une position dite « de tablette » dans laquelle le siège ainsi rabattu peut faire office de table d'écriture par exemple.

Enfin, la figure 4 peut illustrer deux configurations distinctes selon que l'on considère que le siège avant passager et la console centrale sont ou non retirés sous la planche de bord dans la cavité 68. Dans ce dernier cas, la console est en position d'utilisation entre les deux sièges de première ligne et le siège avant passager est seulement en position replié, dossier rabattu sur son assise. Avec cette configuration, il se dégage un espace supplémentaire de chargement au dessus du siège et de la console centrale permettant la mise en place d'objets de grande longueur (des skis par exemple) traversant d'un bout à l'autre l'habitacle. Toutefois, la relative fragilité des matériaux composant le siège passager interdit en pratique le dépôt de pièces de très fort poids (meubles par exemple) sur la console et le siège ainsi replié. Aussi, pour la mise en place de ces dernières, il est nécessaire de placer le siège avant passager dans sa position finale « de rangement sous la planche de bord » dans laquelle le siège passager est poussé dans la cavité 68 pratiquée sous la planche de bord contre le tablier avant du véhicule 20 afin de libérer en totalité l'espace passager et notamment toute la longueur intérieure au bas de l'habitacle. Cette dernière configuration est obtenue par exemple (dans le cas d'un siège avant passager à roulette) simplement en procédant au déverrouillage des crochets de fixation au plancher puis en redressant le siège sur ces roulettes par un système de ressort et enfin en repoussant le siège vers la cavité sous la planche de bord, deux roulettes collatérales munies de gorges suivant un « rail guide » pour donner un trajectoire rectiligne au siège qui est alors verrouillé au plancher de la cavité par les crochets de fixation. Une procédure de retrait similaire sous la planche de bord peut aussi être appliquée à la console centrale en déverrouillant le levier 74 et en poussant la console vers la cavité 68.

Avec la présente invention, l'habitacle du véhicule présente une très grande modularité avec des sièges dont la transformation individuelle permet d'accroître considérablement et sans effort le volume de chargement du véhicule. De plus, aucune dépose des sièges ni réserve d'espace sous le plancher n'est nécessaire pour aboutir à ce résultat. En outre, cette modification du volume de chargement est variable selon la configuration retenue pour les différents sièges.

On notera que l'aménagement de l'habitacle tel qu'il a été décrit précédemment est applicable aussi bien aux véhicules de grande habitabilité type « monospace » pouvant présenter plusieurs lignes de sièges (une application à des véhicules de transport collectif de type minibus est également envisageable) qu'aux véhicules spécifiquement urbains de petite dimension qui ne présentent dans une configuration d'utilisation normale pratiquement aucun volume de chargement. Il est bien entendu adaptable à une conduite à gauche comme à droite. En pratique, un tel aménagement est souhaitable chaque fois qu'une utilisation optimisée des volumes intérieurs du véhicule est envisagée.

## Revendications

1. Véhicule automobile à au moins deux lignes (26, 28) de sièges disposés sur un plancher (14), en arrière d'une planche de bord (24), entre deux panneaux latéraux (16, 18) du véhicule, une première ligne comportant un siège conducteur (30) et un siège avant passager (32) séparés par une console centrale (34) et au moins une seconde ligne de sièges (28) comportant deux sièges arrière passager (36, 38) séparés par un espace central vide (40), chaque siège comportant une assise (30a, 32a, 36a, 38a) et un dossier (30b, 32b, 36b, 38b) qui peut être rabattu sur cette assise, caractérisé en ce que les sièges de la seconde ligne (28) sont montés à pivotement pour être rabattus dans ou contre les panneaux latéraux (16, 18) du véhicule et en ce que le siège avant passager (32) est monté à déplacement longitudinal pour être poussé sous la planche de bord (24) dans une cavité (68) pratiquée pour la recevoir.

2. Véhicule automobile selon la revendication 1, caractérisé en ce que ladite console centrale est montée à déplacement longitudinal pour être poussée sous la planche de bord (24) dans la cavité (68).

3. Véhicule automobile selon la revendication 1 ou la revendication 2, caractérisé en ce que le siège avant passager (32) et la console centrale (34) sont montés à coulissement le long de rails de guidage (72 ; 80, 82), ces rails s'étendant sous la planche de bord (24) jusqu'au tablier avant du véhicule (20).

4. Véhicule automobile selon la revendication 1, caractérisé en ce que chacun des sièges passager de seconde ligne (36, 38) ou de lignes suivantes bascule autour d'un axe d'articulation (50) parallèle à un axe central longitudinal du véhicule.

5. Véhicule automobile selon la revendication 4, caractérisé en ce que ledit axe d'articulation longitudinal est solidaire d'un panneau latéral (16, 18) du véhicule.

6. Véhicule automobile selon la revendication 5, caractérisé en ce que ledit axe d'articulation est relié audit panneau latéral du véhicule par un montant en forme de U (52, 54).

7. Véhicule automobile selon la revendication 4, caractérisé en ce que ledit axe d'articulation longitudinal est solidaire de premiers pieds collatéraux (42a, 46a ; 44a, 48a) du siège passager.

8. Véhicule automobile selon la revendication 4, caractérisé en ce que chacun desdits sièges passager se replie dans une cavité (60, 62) pratiquée dans un panneau latéral du véhicule.

9. Véhicule automobile selon la revendication 4, caractérisé en ce que chacun desdits sièges passager comporte des seconds pieds collatéraux (42b, 46b; 44b, 48b) munis de moyens d'accrochage au plancher du véhicule (14).

10. Véhicule automobile selon l'une quelconque des revendications 4 à 9, caractérisé en ce que chacun desdits sièges passager comporte une assise (34a, 36a) montée sur des glissières (64a,64b ;66a, 66b) pour permettre un coulissement latéral du siège.
